# FASCICULE DE BREVET EUROPEEN

(11) **EP 2 361 143 B1**
(45) Date de publication et mention de la délivrance du brevet: **20.06.2018**
(21) Numéro de dépôt: 09768137.3
(22) Date de dépôt: 03.11.2009
(51) Int. Cl.: B01D 71/02

(54) **MEMBRANE DE FILTRATION, PRESENTANT UNE RESISTANCE A L'ABRASION AMELIOREE**
FILTRATIONSMEMBRAN MIT VERBESSERTER BESTÄNDIGKEIT GEGEN ABRIEB
FILTRATION MEMBRANE HAVING IMPROVED RESISTANCE TO ABRASIONS

(30) Priorité: 07.11.2008 FR 0857584
(43) Date de publication de la demande: 31.08.2011
(73) Titulaire: Technologies Avancées & Membranes Industrielles, 26110 Nyons (FR)
(72) Inventeur: LESCOCHE, Philippe, F-26110 Piegon (FR)
(74) Mandataire: Sarlin, Laure V.
(86) Numéro de dépôt international: PCT/FR2009/052125
(87) Numéro de publication internationale: WO 2010/052424

(56) Documents cités:
- EP-A2- 0 712 946
- WO-A-03/010421
- WO-A-2008/114046
- JP-A- 2005 270 707
- US-A- 4 810 273
- US-A1- 2003 132 174
- US-A1- 2008 190 841

## Description

La présente invention concerne le domaine technique de la filtration tangentielle. En particulier l'invention a pour objet de nouvelles membranes de filtration présentant une résistance améliorée à l'abrasion, ainsi que leur procédé de fabrication.

Les procédés de séparation utilisant des membranes sont utilisés dans de nombreux secteurs, notamment dans l'environnement pour la production d'eau potable et le traitement des effluents industriels, dans l'industrie chimique, pétrochimique, pharmaceutique, agro-alimentaire et dans le domaine de la biotechnologie.

Une membrane constitue une barrière mince sélective et permet sous l'action d'une force de transfert le passage ou l'arrêt de certains composants du milieu à traiter. Le passage ou l'arrêt des composants peut résulter de leur taille par rapport à la taille des pores de la membrane qui se comporte alors comme un filtre. En fonction de la taille des pores, ces techniques sont nommées microfiltration, ultrafiltration, ou nanofiltration.

Il existe des membranes de structure et texture différentes. Certaines sont composées de matériaux organiques, de type polymères de synthèse et sont nommées membranes organiques, d'autres sont composées de matériaux inorganiques et sont nommées membranes inorganiques.

Les membranes inorganiques sont en général constituées d'un support macroporeux de 0,5 à 3 mm d'épaisseur qui assure la résistance mécanique de la membrane et donne également la forme et donc détermine la surface filtrante de la membrane. Ce support est en général composé de carbone, d'oxyde métallique, notamment du type alumine, dioxyde de titane ou dioxyde de zirconium pur ou en mélange, de silico-aluminate ou de carbure de silicium. Sur ce support, une ou plusieurs couches de quelques microns d'épaisseur assurant la séparation et dites couches séparatrices, ou couches de séparation, sont déposées, comme décrit dans les documents US 4 810 273, US 2003/132 174 et WO 2008/114 046. Les épaisseurs de ces couches varient typiquement entre 1 et 100 µm d'épaisseur. Durant la séparation, le transfert du fluide s'effectue à travers la couche séparatrice, puis le fluide se répand dans la porosité du support pour se diriger vers la surface extérieure du support poreux. La partie du fluide à traiter ayant traversé la couche de séparation et le support poreux est appelée perméat et se trouve récupérée par une chambre de collecte entourant la membrane. L'autre partie est appelée rétentat et est, le plus souvent, réinjectée dans le fluide à traiter en amont de la membrane, grâce à une boucle de circulation.

Le diamètre des pores est choisi en fonction de la taille des espèces à séparer. Ces couches de nature inorganique sont, en général, constituées d'oxydes métalliques, de verre ou de carbone et sont liées entre elles et au support par frittage. Le support et les couches séparatrices se distinguent, notamment, par des diamètres moyens de pores ou porosité ou par des masses spécifiques différentes. Les notions de couche séparatrice de microfiltration, ultrafiltration et nanofiltration sont bien connues de l'homme de l'art. Il est généralement admis que :
- les supports présentent un diamètre moyen de pore compris entre 2 et 12 µm,
- les couches séparatrices de microfiltration présentent un diamètre moyen de pore compris entre 0,1 et 2 µm et une masse spécifique comprise entre 30 et 100 g/m²,
- les couches séparatrices d'ultrafiltration présentent un diamètre moyen de pore compris entre 0,01 et 0,1 µm et une masse spécifique comprise entre 5 et 15 g/m²,
- les couches séparatrices de nanofiltration présentent un diamètre moyen de pore compris entre 0,5 et 2 nm et une masse spécifique comprise entre 1 et 5 g/m².

Suivant le principe de la filtration tangentielle, le fluide à traiter circule à grande vitesse sur la surface de la ou des couches de séparation, afin de générer une contrainte de cisaillement qui redisperse les matières déposées sur cette surface. Il apparaît ainsi un frottement du fluide sur la surface de la couche de filtration.

Dans de nombreuses applications de filtration tangentielle par membrane, en microfiltration (MF) et en ultrafiltration (UF), le rétentat peut contenir des particules abrasives. Ces particules, sous l'effet de la circulation du fluide dans la boucle rétentat, provoquent une abrasion des couches de séparation, endommageant ainsi prématurément la membrane.

En effet, la sensibilité des couches de séparation à l'abrasion est due au fait que ces couches sont en contact direct avec les particules abrasives contenues dans le rétentat. Lors de la circulation du rétentat dans les canaux de la membrane tubulaire, à des vitesses de circulation variant de 1 à quelques m/s, les particules viennent frapper la surface de la couche avec une grande énergie. De plus ces particules étant significativement plus grosses que les diamètres de pores de la couche, ces particules restent indéfiniment, voire se concentrent dans la boucle rétentat.

La relative faible résistance à l'abrasion des couches céramiques de séparation est due à leur forte porosité. En effet, les matériaux céramiques utilisés dans la fabrication des couches de séparation sont très résistants à l'abrasion lorsqu'ils sont denses, comme c'est le cas des céramiques techniques utilisées dans les applications mécaniques. Lorsque la température de cuisson des céramiques augmente, le volume poreux diminue jusqu'à ce que l'on atteigne un matériau complètement dense. Dans le même temps le nombre des liaisons chimiques entre grains de céramique s'accroit, la force de ces liaisons augmente, débouchant sur un matériau de plus en plus solide.

Mais dans le cas des membranes de filtration, il est évident que ces couches doivent rester très poreuses afin de favoriser les flux de perméation. Pour obtenir des flux élevés de perméation, les couches de séparation sont frittées à des températures beaucoup moins élevées que leur température de densification, interdisant ainsi d'atteindre leur niveau maximum de résistance à l'abrasion.

De plus les grains de céramique constituant les couches séparatrices sont de faible diamètre, car les diamètres de pore requis en microfiltration et ultrafiltration sont très faibles. Les tailles de grain des particules céramiques constituant ces couches s'étalent, notamment, entre 20 nm et 1 µm environ. Une particule abrasive de quelques dizaines ou quelques centaines de micron qui vient percuter une telle couche a donc un impact mécanique très fort.

Afin de pallier à ces inconvénients, deux solutions ont jusqu'à maintenant été proposées :
- augmenter le plus possible la température de cuisson des couches,
- augmenter les épaisseurs de couche.

Néanmoins, ces deux solutions restent très limitées. En effet, d'une part, pour conserver une porosité suffisante et obtenir le bon diamètre de pore, la plage des températures de cuisson possible reste limitée, et d'autre part, l'augmentation des épaisseurs retarde la dégradation totale de la couche sans permettre de gain vraiment significatif.

Il existe donc un besoin important pour d'autres solutions.

Cette abrasion est d'autant plus agressive que :
- la concentration des particules est grande
- la vitesse de circulation est élevée
- les particules sont dures et au fort pouvoir abrasif.

La taille de ces particules abrasives solides peut s'étaler de quelques microns à quelques mm. Dans le cadre de la présente demande de brevet, le terme « particules abrasives» est utilisé pour désigner des éléments abrasifs, qui ne présentent pas forcément une forme sphérique, mais peuvent avoir une forme quelconque, notamment du type copeaux ou agrégats.

De manière non exhaustive, on peut citer quelques exemples de particules abrasives et des exemples d'applications de membranes, dans lesquels elles sont rencontrées :
- particules ou copeaux métalliques de tout type de métal, et par exemple d'inox, aciers divers ou fer, rencontrés, notamment, dans le recyclage des bains de dégraissage, le recyclage des bains d'usinage, le traitement des fluides de coupe, la récupération de particules microniques,
- particules minérales ou agrégats de tout type de matériau inorganique, et par exemple d'oxydes, charbon actif, silice ou sable, rencontrés, notamment, dans les bioréacteurs à membranes, notamment utilisés dans le traitement des eaux, le traitement des lixiviats, le traitement des effluents nucléaires, la clarification de boissons chargées en tartre, le recyclage des catalyseurs, les traitements avec adjuvants de filtration (ex charbon actif), le traitement d'effluents de l'industrie céramique, la séparation moléculaire des moûts de fermentation,
- particules d'origine organique comme par exemple des résidus de coque ou coquille de fruits, des sucres ... rencontrées, par exemple, dans la clarification des jus sucrés.

Pour ces applications, et d'autres non citées, les membranes s'usent très vite rendant leur utilisation très coûteuse, voire sans solution technique. C'est pourquoi il est très important de pouvoir répondre à ce besoin.

Les documents JP 2005 270707, US 2008/190841 et EP 0 712 945 décrivent l'emploi de particules ou fibres dans des membranes dans diverses applications.

Dans ce contexte, la présente invention se propose de fournir de nouvelles membranes qui présentent, en cas d'applications en milieux abrasifs, une durée de vie augmentée, tout en pouvant être produites à faible coût et selon un processus industriel.

L'objet de l'invention concerne une nouvelle membrane inorganique qui résiste beaucoup mieux à l'abrasion que les membranes actuelles, et un procédé de fabrication d'une telle membrane.

L'invention a donc pour objet une membrane pour la filtration tangentielle d'un fluide à traiter comportant des particules abrasives, comportant un support poreux recouvert sur une partie de sa surface par une couche de séparation de diamètre moyen de pore inférieur à celui du support, sur laquelle circule le fluide à traiter, caractérisée en ce que la couche de séparation comporte un agent de protection contre les particules abrasives, destiné à protéger la couche de séparation des agressions abrasives.

L'invention a également pour objet un procédé de fabrication d'une telle membrane qui comprend l'incorporation lors du dépôt de la couche de séparation de l'agent de protection sous la forme d'éléments de protection individualisés. Selon un mode de réalisation, la taille des éléments de protection est supérieure ou égale à l'épaisseur de la couche de séparation. Selon un autre mode de réalisation, la couche de séparation est multicouche et la taille des éléments de protection est supérieure ou égale à l'épaisseur de la couche active de la couche de séparation.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue en coupe transversale d'un exemple de réalisation d'une membrane conforme à l'invention.
La **Figure 2** est une vue en coupe volontairement agrandie de la partie **II** d'un support recouvert d'une couche de séparation, dans laquelle des éléments de protection sont partiellement intégrés.
La **Figure 3** compare l'évolution de la perte de masse de la couche de séparation au cours de l'abrasion obtenue avec des éléments de filtration conformes à l'invention et de membranes selon l'art antérieur.

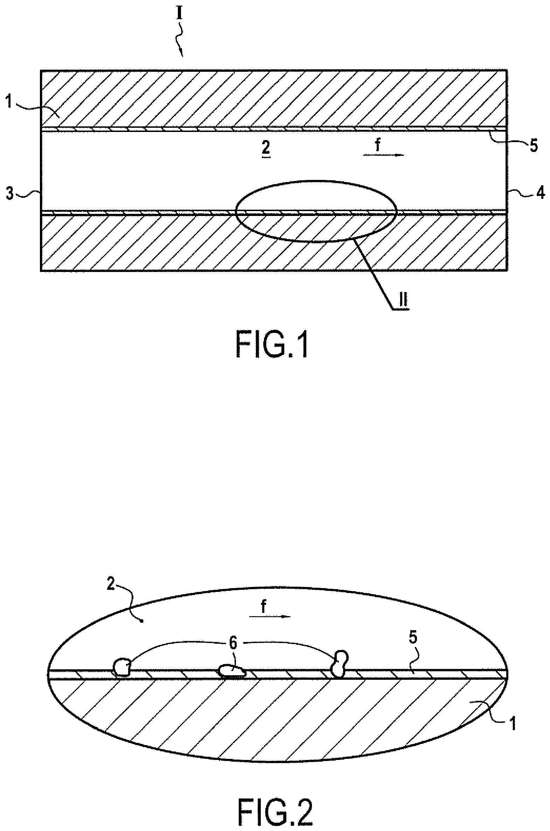

Les membranes selon l'invention peuvent comporter un support tubulaire ou plan. Dans le domaine des membranes tubulaires, le support poreux rigide est de forme allongée en présentant une section transversale droite polygonale ou circulaire. Le support poreux est aménagé pour comporter au moins un et, de préférence, une série de canaux parallèles entre eux et à l'axe longitudinal du support poreux, en présentant chacun une forme cylindrique. La **Figure 1** présente un exemple de réalisation d'un élément de filtration **I** de forme tubulaire et de section circulaire, comportant un support **1** dans lequel est aménagé un seul canal **2.** Les canaux communiquent, d'un côté, avec une chambre d'entrée pour le milieu fluide à traiter et, de l'autre côté, avec une chambre de sortie. Sur la **Figure 1****,** le fluide à filtrer circule dans le canal **2,** dans le sens **f,** de l'entrée **3** vers la sortie **4.** La surface des canaux est recouverte d'au moins une couche séparatrice assurant la séparation des molécules ou des particules contenues dans le milieu fluide circulant à l'intérieur des canaux, selon un sens donné, d'une extrémité à l'autre des canaux. Cette couche de séparation est représentée sous la référence **5** à la **Figure 1****.** Une telle membrane réalise, par effet tamis, une séparation des espèces moléculaires ou particulaires du produit à traiter, dans la mesure où toutes les particules ou molécules supérieures au diamètre des pores de la membrane sont arrêtées. Durant la séparation, le transfert du fluide s'effectue à travers la couche séparatrice, puis le fluide se répand dans la porosité du support pour se diriger vers la surface extérieure du support poreux. La partie du fluide à traiter ayant traversé la couche de séparation et le support poreux est appelée perméat et se trouve récupérée par une chambre de collecte entourant la membrane.

Dans le cadre de l'invention, la membrane peut avoir un caractère plan. Dans ce cas, la couche de séparation peut être déposée directement sur l'une des faces du support. Le support poreux peut également se présenter sous la forme d'un bloc dans lequel est aménagé au moins un, et en général une série de canaux superposés présentant chacun une section droite transversale polygonale généralement rectangulaire. La surface des canaux est recouverte d'au moins une couche séparatrice.

Le support peut, par exemple, être composé de carbone, d'aluminate de silicium ou de carbure de silicium ou, de manière préférée d'oxyde métallique, notamment du type alumine, dioxyde de titane ou dioxyde de zirconium pur ou en mélange.

La couche de séparation peut être monocouche ou multicouche. Dans la suite de la description, on appellera « couche de séparation », l'unique couche de filtration (dans le cas d'une monocouche) ou l'ensemble des couches successives de filtration (dans le cas d'une multicouche comportant une ou plusieurs couches intermédiaires). En particulier, la couche de séparation peut être composée d'une seule couche de microfltration qui présente un diamètre moyen de pore de 0,1 à 2 µm, ou encore une couche d'ultrafiltration qui présente un diamètre moyen de pore compris de 0,01 à 0,1 µm. Le diamètre moyen de pore peut notamment être déterminé par porosimétrie par intrusion de mercure dans le cas des couches de microfliltration, ou par mesure de rétention aux molécules étalon type dextrane telle que décrite dans la norme NF X 45-103, dans le cas des couches d'ultrafliltration. Il est possible que cette couche de micro ou d'ultrafiltration soit déposée directement sur le support poreux (cas d'une couche de séparation monocouche), ou encore sur une couche intermédiaire de diamètre moyen de pore moindre, elle-même déposée directement sur le support poreux (cas d'une couche de séparation monocouche). La couche de séparation peut, par exemple, être à base de ou constituée exclusivement d'oxyde métallique, en particulier choisi parmi TiO₂, Al₂O₃ et ZrO₂, seul ou en mélange. Dans le cas d'une couche de séparation multicouche, la dernière couche de filtration déposée est celle sur laquelle circule le fluide à traiter et détermine le seuil de coupure de la membrane : cette couche est nommée couche active de la couche de séparation.

Selon leur caractéristique principale, les membranes selon l'invention comporte un agent de protection contre les particules abrasives, apte à protéger leur couche de séparation des agressions abrasives. L'agent de protection est donc distinct de la couche de séparation, même s'il peut être intégré au sein de cette dernière. Il va être positionné de manière à garantir une protection de la couche de séparation et va donc être situé directement en contact ou au voisinage très proche de la surface sur laquelle circule le fluide à traiter. Par agent de protection contre les particules abrasives, on entend un agent dans un matériau très résistant qui va permettre de limiter l'usure de la couche de séparation vis-à-vis des agressions des particules abrasives lors de l'utilisation de la membrane. Cet agent de protection se présente sous la forme d'éléments de protection individualisés. Le rôle de l'agent protecteur est d'absorber une part significative de l'énergie des particules abrasives contenues dans le milieu à filtrer et/ou de réfléchir ces particules, de manière à amoindrir, voire éviter leur contact avec la couche de séparation.

L'agent de protection se trouve sous la forme d'éléments de protection sous la forme de particules répartis au sein de la couche de séparation. Les éléments de protection doivent se trouver au voisinage très proche de la surface sur laquelle circule le fluide à traiter pour pouvoir jouer pleinement leur rôle de réflecteur des particules abrasives. Ces éléments de protection présentent une taille comprise dans la gamme allant de 1 µm à 1 mm, de manière préférée dans la gamme allant de 10 à 100 µm. Cette taille qui correspond à la plus grande dimension de l'élément de protection peut notamment être déterminée par microscopie électronique à balayage. Il est à noter que dans le cas où les éléments de protection sont des particules de forme sphérique, la plus grande dimension correspond au diamètre de la particule. Pour la fabrication des membranes selon l'invention, on utilise des éléments de protection qui vont être directement intégrés à la couche de séparation lors de sa constitution. Aussi, les éléments de protection, utilisés en amont de leur intégration à la membrane, présenteront, de préférence, une taille choisie dans la gamme allant de 1 µm à 1 mm, de manière préférée dans la gamme allant de 10 à 100 µm. On peut mesurer la taille des éléments de protection qui correspond à leur plus grande dimension moyenne par analyse granulométrique laser en plaçant les éléments de protection en suspension dans l'eau. La plus grande dimension moyenne correspond, dans le cadre de l'invention, à la **d50** volumique (50% du volume des éléments de protection est constitué d'éléments de plus grande dimension inférieure à **d50** et 50 % est constitué d'éléments de plus grande dimension supérieure à **d50**). Cette technique de granulométrie laser est particulièrement adaptée pour mesurer des tailles jusqu'à 100 µm, au-delà (100 µm à 1 mm), d'autres techniques, comme le tamisage ou la microscopie optique, seront avantageusement utilisées.

Cette taille doit être suffisante pour résister aux impacts des particules abrasives. Elle sera, par exemple, du même ordre de grandeur ou supérieure à la taille des particules abrasives, sans toutefois perturber l'écoulement du fluide à travers les canaux. De plus, dans le cas où les éléments protecteurs sont d'origine minérale, une trop grande taille nuirait à leur accrochage à la surface de la membrane de par sa trop faible réactivité lors du frittage. Par ailleurs, on préférera utiliser des éléments dont la taille moyenne est de l'ordre de grandeur de l'épaisseur de la couche de séparation. La taille des éléments telle que définie précédemment correspond, par exemple, à l'épaisseur de la couche de séparation et jusqu'à + de 20 % l'épaisseur de la couche de séparation. Dans le cas d'une couche de séparation multicouche, la taille des éléments de protection peut également être de l'ordre de grandeur de l'épaisseur de la couche active et être, par exemple, égale à son épaisseur et jusqu'à + 20 % de son épaisseur.

L'agent de protection est de nature minérale. A titre d'exemple, l'agent de protection peut comporter ou être constitué exclusivement d'un matériau minéral tel que les oxydes métalliques et carbures métalliques classiquement utilisés en tant que matériaux constitutifs des membranes. A titre d'exemple, l'agent de protection peut être à base ou constitué exclusivement de TiO₂, Al₂O₃, ZrO₂, carbone, SiC ou aluminate de silicium. Selon une variante de réalisation avantageuse, l'agent de protection est sous la forme d'éléments de protection constitués du même matériau que celui de la couche de séparation à protéger. C'est la taille des éléments de protection, bien supérieure, par exemple de 10 à 100 fois supérieure, à la taille des grains servant à la constitution de la couche de séparation par frittage, qui leur permet de jouer leur rôle de protecteur contre l'abrasion. D'un point de vue pratique, en utilisant le même matériau pour la couche de séparation et les éléments de protection, on obtient une facilité de mise en oeuvre : en effet, lors du frittage, les éléments de protection s'associent facilement avec la couche de séparation. Par contre, bien que de même nature chimique que les grains servant à la constitution de la couche de séparation, de par leur taille, les éléments de protection conservent leur intégrité lors de l'étape de frittage de la couche de séparation. De plus, dans le cas d'un matériau de même nature, les éléments de protection répondent aux mêmes contraintes (hormis bien entendu celles liées à la résistance à l'abrasion pour lesquelles ils présentent des performances supérieures) et notamment en termes de résistance chimique, que la couche de séparation.

La masse de l'agent de protection représente de 10 à 70% de la masse de la couche de séparation, la masse de la couche de séparation s'entend, bien entendu, hors agent de protection même si ce dernier est inséré au sein de la couche de séparation. L'agent de protection de nature inorganique se trouve sous la forme d'éléments de protection individualisés. De préférence, la masse des éléments de protection représente alors de 40 à 60% de la masse de la couche de séparation. De manière indépendante, la forme (et notamment la taille dans le cas d'éléments de protection individualisés) et la densité des éléments de protection permettent d'optimiser leur efficacité.

L'agent de protection est intégré partiellement dans la couche de séparation. Pour remplir pleinement son rôle d'agent de protection, ce dernier sera localisé de façon débordante vis-à-vis de la surface de la couche de séparation sur laquelle va circuler le fluide à traiter, en étant partiellement intégrée à la couche de séparation pour faciliter son accrochage.

La **Figure 2** illustre un mode de réalisation dans lequel l'agent de protection est constitué d'éléments de protection **6** individualisés qui sont, en partie seulement, intégrés dans la couche de séparation. L'intégration des éléments de protection dans la couche de séparation présente l'avantage de parfaitement accrocher ces éléments à la membrane.

Le procédé de réalisation d'une membrane inorganique consiste traditionnellement en la préparation d'une suspension, contenant un solvant tel que l'eau ou un alcool, la poudre céramique à déposer, des additifs tels que dispersant et anti-mousse, et un ou des liants organiques dont le rôle est d'ajuster la viscosité et les caractéristiques rhéologiques. Le pH peut éventuellement être ajusté par ajout d'acide ou de base. Ensuite, le dépôt sur le substrat (support ou support déjà recouvert d'une ou plusieurs couches) est réalisé par remplissage des canaux dans le cas de membranes tubulaires, ou par pulvérisation dans le cas de membranes planes. Les pièces sont ensuite séchées et frittées.

Selon l'invention, lorsque des éléments protecteurs sont intégrés dans la couche de séparation, les éléments de protection, par exemple sous la forme d'une poudre inorganique de taille granulométrique élevée, notamment telle que définie précédemment, sont ajoutés à la suspension. La nature et la quantité des additifs, ainsi que celle des liants est éventuellement modifiée afin d'optimiser l'intégration des éléments de protection dans la suspension. Un mélange homogène est assuré à l'aide d'une hélice ou de tout autre équipement classiquement utilisé pour les mélanges. Ensuite, le dépôt est réalisé par remplissage des canaux dans le cas de membranes tubulaires, ou par pulvérisation dans le cas de membranes planes. Les pièces sont ensuite séchées et frittées.

Selon une variante de l'invention, plusieurs dépôts successifs peuvent être réalisés afin d'augmenter l'épaisseur de la couche de séparation. Ces dépôts successifs peuvent être intercalés de cuisson ou non. Selon une variante de réalisation, les éléments protecteurs sont intégrés au dernier dépôt constituant la couche superficielle de la couche de séparation multicouche, sur laquelle le fluide à filtrer va circuler, lors de son étape de filtration.

Les éléments de protection peuvent également être déposés par-dessus la couche de séparation. Pour cela, une suspension est préparée, comprenant :
- les éléments protecteurs sous la forme notamment d'une poudre, de granules, de copeaux ...,
- un solvant, par exemple tel que l'eau ou un alcool,
- un liant organique, par exemple tel qu'un liant à base de cellulose ou d'alcool polyvinylique ou de polyéthylène glycol,
- des additifs pour optimiser la dispersion et la stabilité de la suspension
- éventuellement un acide ou une base pour ajuster le pH de la suspension.

Le dépôt des éléments de protection est, ensuite, réalisé par imprégnation de la membrane avec cette suspension. Dans le cas de membrane tubulaire, les canaux sont remplis avec la suspension, vidés après un palier, puis séchés et frittés à haute température, typiquement à une température appartenant à la plage 400-1200°C.

Les exemples de réalisation qui suivent permettent d'illustrer l'invention mais n'ont aucun caractère limitatif. Les tailles des grains de TiO₂ sont déterminées, par analyse granulométrique laser, avec un granulomètre laser de marque Malvern. La mesure est réalisée dans l'eau déionisée, après dispersion de la poudre par ultra-sons pendant 30 secondes. La taille obtenue est la taille moyenne **A** des grains qui correspond au d50 volumique (50% du volume de poudre est constitué de particules inférieures à **A** et 50 % de particules supérieures à **A**).

### Exemple de réalisation 1 :

Sur un support poreux, de composition TiO₂, de volume poreux égal à 30%, de diamètre de pore moyen 4,5 µm, et comprenant une première couche de filtration de diamètre moyen de pore 0,45 µm en TiO₂ et d'épaisseur moyenne 25 µm, une deuxième couche de filtration incorporant des éléments de protection selon l'invention est réalisée par imprégnation d'une suspension. Cette suspension est préparée par broyage dans l'eau de poudre de TiO₂, de taille moyenne initiale de grain 0,3 µm, ajoutée de dispersant de la famille des Coatex. On ajoute ensuite de la poudre de composition TiO₂, de taille de grain moyenne 20µm. La suspension est mélangée à l'aide d'une hélice. Un liant cellulosique est ensuite ajouté.

Après séchage et cuisson à 900°C sous air, une membrane de seuil de coupure 0,14 µm est obtenue.

La suspension est préparée dans les proportions suivantes :
- poudre TiO₂ 0,3 µm dans l'eau à la concentration 50 g/l d'eau
- 50 % massique d'élément protecteur TiO₂ 20 µm
- 22 % massique de liant cellulosique
- 0,5 % massique de dispersant

Les proportions des trois derniers éléments sont exprimées en % massique de la quantité de TiO₂ de taille de grain 0,3 µm.

### Exemple de réalisation 2 :

Sur une membrane constituée d'un support macroporeux en TiO₂, d'une sous-couche de diamètre moyen de pore 0,45 µm et d'épaisseur 25 µm en TiO₂, d'une seconde couche de séparation de diamètre moyen de pore 0,14 µm et d'épaisseur 10 µm en TiO₂/ZrO₂ (30% massique TiO₂ / 70% massique ZrO₂), un dépôt d'éléments de protection est réalisé par enduction d'une suspension aqueuse comprenant :
- de l'eau,
- une poudre de TiO₂ de taille de grain moyenne 20 µm à la concentration 20 g/l d'eau,
- un dispersant de la famille des coatex (0,5 % massique de la quantité de TiO₂),
- un liant cellulosique (12% massique de la quantité de TiO₂).

Après séchage et cuisson à 1000°C, une membrane de 0,14 µm, partiellement recouverte d'éléments protecteurs en TiO₂ est obtenue.

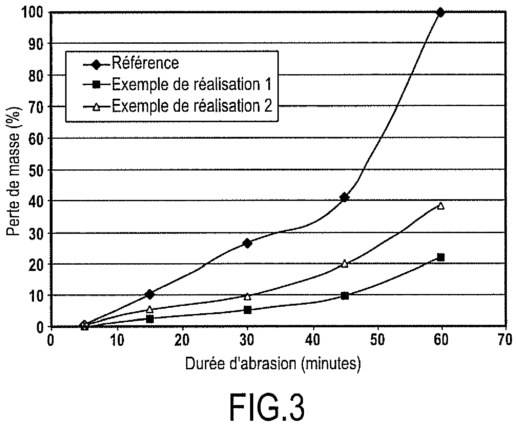

La résistance à l'abrasion a été caractérisée par soufflage, dans les canaux de la membrane, de particules hautement abrasives en SiC, de diamètre moyen de grain 100 µm. A intervalle régulier, la masse de la couche de filtration est pesée afin d'évaluer son taux d'usure. Cette méthode est particulièrement sévère, mais elle permet de comparer la résistance à l'abrasion des membranes entre elles. La **Figure 3** illustre l'évolution en fonction du temps d'abrasion, de la perte de masse de la couche de séparation. Alors qu'une membrane classique (support TiO₂ - couche de séparation TiO₂, tubulaire de diamètre 25 mm à 8 canaux, de seuil de coupure 0,14 µm) se dégrade de façon irrémédiable dès les premiers instants pour être totalement abrasée après 60 minutes, la membrane réalisée selon l'exemple 1 a perdu seulement 20% de la masse de sa couche de séparation et la membrane réalisée selon l'exemple 2 a perdu environ 40% de sa masse. Les deux membranes réalisées selon l'invention continuent donc de fonctionner, alors que la membrane traditionnelle est détruite. On peut estimer que la durée de vie des membranes selon l'invention est doublée par rapport aux membranes traditionnelles, ce qui est très significatif.

L'invention n'est pas limitée aux exemples décrits et représentés car diverses modifications peuvent y être apportées sans sortir de son cadre.

## Revendications

1. Membrane inorganique pour la filtration tangentielle d'un fluide à traiter comportant des particules abrasives, comportant un support **(1)** poreux, rigide, tubulaire et allongé, présentant une section transversale droite polygonale ou circulaire, et comportant au moins un canal **(2)** parallèle à l'axe dudit support **(1)** présentant une forme cylindrique, la surface dudit canal **(2)** étant recouverte par une couche de séparation **(5)** de diamètre de pore inférieur à celui du support, sur laquelle circule le fluide à traiter, **caractérisée en ce que** la couche de séparation comporte un agent de protection **(6)** de nature inorganique contre les particules abrasives, destiné à protéger la couche de séparation **(5)** des agressions abrasives, ledit agent de protection **(6)** se trouvant sous la forme d'éléments de protection individualisés sous la forme de particules, intégrés partiellement à la couche de séparation **(5)** sur laquelle va circuler le fluide à traiter, de manière à être localisé de façon débordante vis-à-vis de celle-ci, l'agent de protection **(6)** représentant de 10 à 70 % de la masse de la couche de séparation.

2. Membrane selon la revendication 1, **caractérisé en ce que** le support **(1)** poreux est composé de carbone, d'aluminate de silicium, de carbure de silicium ou d'oxyde métallique.

3. Membrane selon la revendication 1 **caractérisée en ce que** l'agent de protection **(6)** est à base ou constitué exclusivement de TiO₂, Al₂O₃, ZrO₂, carbone, SiC ou aluminate de silicium.

4. Membrane selon la revendication 1 **caractérisée en ce que** la masse des éléments de protection représente de 40 à 60% de la masse de la couche de séparation **(5).**

5. Membrane selon l'une des revendications précédentes **caractérisée en ce que** les éléments de protection présentent une taille de 1 µm à 1 mm, de manière préférée de 10 à 100 µm, bien supérieure à la taille des grains servant à la constitution de la couche de séparation **(5)** par frittage.

6. Membrane selon l'une des revendications précédentes **caractérisée en ce que** la couche de séparation **(5)** est à base ou constituée exclusivement d'oxyde métallique, en particulier choisi parmi TiO₂, Al₂O₃ et ZrO₂, seul ou en mélange.

7. Membrane selon l'une des revendications précédentes **caractérisée en ce que** la couche de séparation **(5)** est une couche de microfiltration qui présente un diamètre moyen de pore de 0,1 à 2 µm ou une couche d'ultrafiltration qui présente un diamètre moyen de pore de 0,02 à 0,1 µm.

8. Membrane selon l'une des revendications précédentes **caractérisée en ce que** la couche de séparation **(5)** est composée d'une seule couche ou de plusieurs couches.

9. Procédé de fabrication d'une membrane selon l'une des revendications précédentes qui comprend une étape d'incorporation dans la couche de séparation **(5),** lors de son dépôt, de l'agent de protection **(6)** sous la forme d'éléments de protection individualisés, la taille des éléments de protection étant supérieure ou égale à l'épaisseur de la couche de séparation **(5),** de manière à ce que les éléments de protection soient intégrés partiellement à la couche de séparation **(5).**

10. Procédé selon la revendication 9 **caractérisé en ce que** la couche de séparation **(5)** est multicouche et **en ce qu'**il comprend l'incorporation, lors du dépôt de la couche de séparation **(5),** de l'agent de protection **(6)** sous la forme d'éléments de protection individualisés, la taille des éléments de protection étant supérieure ou égale à l'épaisseur de la couche active, de la couche de séparation.

## Patentansprüche

1. Anorganische Membran für die Tangentialfiltration eines zu behandelnden Fluids, das Schleifteilchen enthält, umfassend einen porösen, starren, röhrenförmigen und langgestreckten Träger (1), der einen polygonalen oder kreisförmigen Querschnitt aufweist, und wenigstens einen parallel zur Achse des Trägers (1) verlaufenden Kanal (2), welcher eine zylindrische Form aufweist, wobei die Oberfläche des Kanals (2) mit einer Trennschicht (5) mit kleinerem Porendurchmesser als der Träger überzogen ist, über die das zu behandelnde Fluid fließt, **dadurch gekennzeichnet, dass** die Trennschicht ein Schutzmittel (6) anorganischer Natur gegen die Schleifteilchen umfasst, das dazu bestimmt ist, die Trennschicht (5) vor den Abriebangriffen zu schützen, wobei das Schutzmittel (6) in Form von Schutzelementen, welche in Form von Partikeln vereinzelt sind, vorliegt, die in die Trennschicht (5), über die das zu behandelnde Fluid fließen wird, teilweise integriert sind, so dass es gegenüber dieser vorstehend lokalisiert wird, wobei das Schutzmittel (6) 10 bis 70 % der Masse der Trennschicht ausmacht.

2. Membran nach Anspruch 1, **dadurch gekennzeichnet, dass** der poröse Träger (1) aus Kohlenstoff, Siliziumaluminat, Siliziumkarbid oder Metalloxid besteht.

3. Membran nach Anspruch 1, **dadurch gekennzeichnet, dass** das Schutzmittel (6) auf Basis von TiO₂, Al₂O₃, ZrO₂, Kohlenstoff, SiC oder Siliziumaluminat ist oder ausschließlich hieraus besteht.

4. Membran nach Anspruch 1, **dadurch gekennzeichnet, dass** die Masse der Schutzelemente 40 bis 60 % der Masse der Trennschicht (5) ausmacht.

5. Membran nach einem der vorhergehenden Ansprüche, **dadurch gekennzeichnet, dass** die Schutzelemente eine Größe von 1 µm bis 1 mm, bevorzugt von 10 bis 100 µm aufweisen, die weit größer als die Größe der Körner ist, welche der Ausbildung der Trennschicht (5) durch Sintern dienen.

6. Membran nach einem der vorhergehenden Ansprüche, **dadurch gekennzeichnet, dass** die Trennschicht (5) auf Basis von Metalloxid, insbesondere ausgewählt aus TiO₂, Al₂O₃ und ZrO₂, allein oder als Mischung, ist oder ausschließlich hieraus besteht.

7. Membran nach einem der vorhergehenden Ansprüche, **dadurch gekennzeichnet, dass** die Trennschicht (5) eine Mikrofiltrationsschicht ist, die einen mittleren Porendurchmesser von 0,1 bis 2 um aufweist, oder eine Ultrafiltrationsschicht, die einen mittleren Porendurchmesser von 0,02 bis 0,1 um aufweist.

8. Membran nach einem der vorhergehenden Ansprüche, **dadurch gekennzeichnet, dass** die Trennschicht (5) aus einer einzigen Schicht oder aus mehreren Schichten besteht.

9. Verfahren zur Herstellung einer Membran nach einem der vorhergehenden Ansprüche, das einen Schritt des Einbettens des Schutzmittels (6) in Form von vereinzelten Schutzelementen in die Trennschicht (5) bei deren Abscheidung umfasst, wobei die Größe der Schutzelemente größer als die oder gleich der Dicke der Trennschicht (5) ist, so dass die Schutzelemente teilweise in die Trennschicht (5) integriert sind.

10. Verfahren nach Anspruch 9, **dadurch gekennzeichnet, dass** die Trennschicht (5) mehrlagig ist und dass es das Einbetten des Schutzmittels (6) in Form von vereinzelten Schutzelementen während der Abscheidung der Trennschicht (5) umfasst, wobei die Größe der Schutzelemente größer als die oder gleich der Dicke der aktiven Schicht der Trennschicht ist.

## Claims

1. Inorganic membrane for the tangential filtration of a fluid to be treated that contains abrasive particles, comprising a porous, rigid, tubular support (1) of elongate shape, having a polygonal or circular cross section, and comprising at least one channel (2) parallel to the axis of said support (1) and having a cylindrical shape, the surface of said channel (2) being covered with a separating layer (5) having a pore diameter smaller than that of the support, over which the fluid to be treated flows, **characterized in that** the separating layer includes protection agent (6) of inorganic nature against the abrasive particles, intended to protect the separating layer (5) from abrasive attack, said protection agent (6) being in the form of individualized protection elements in the form of particles, partially incorporated into the separating layer (5) over which the fluid to be treated flows, so as to be extending beyond the surface of latter, the protection agent (6) representing from 10 to 70% of the mass of the separating layer.

2. Membrane according to claim 1, **characterized in that** the porous support (1) is made of carbon, of aluminosilicate, of silicon carbide, or of metal oxide.

3. Membrane according to claim 1, **characterized in that** the protection agent (6) is based on or consists exclusively of TiO₂, Al₂O₃, ZrO₂, carbon, SiC or aluminosilicate.

4. Membrane according to claim 1, **characterized in that** the mass of the protection elements represents from 40 to 60% of the mass of the separating layer (5).

5. Membrane according to in one of the preceding claims, **characterized in that** the protection elements have a size of from 1 µm to 1 mm, preferably from 10 to 100 µm, much larger than the size of the grains used to constitute the separating layer (5) by sintering.

6. Membrane according in one of the preceding claims, **characterized in that** the separating layer (5) is based on or consists exclusively of metal oxide, in particular chosen from TiO₂, Al₂O₃ and ZrO₂, either by itself or as a mixture.

7. Membrane according to one of the preceding claims, **characterized in that** the separating layer (5) is a microfiltration layer having a mean pore diameter of 0.1 to 2 µm, or an ultrafiltration layer having a mean pore diameter of 0.02 to 0.1µm.

8. Membrane according to one of the preceding claims, **characterized in that** the separating layer (5) is composed of a single layer or of several layers.

9. Process for manufacturing a membrane according to one of the preceding claims, which comprises a step of incorporation in the separating layer (5), during its deposition, of the protection agent (6) in the form of individualized protection elements, the size of the protection elements being greater than or equal to the thickness of the separating layer (5), such that the protection elements are partially incorporated into the separating layer (5).

10. Process according to claim 9, **characterized in that** the separating layer (5) is a multilayer and **in that** it includes the incorporation, during deposition of the separating layer (5), of the protection agent (6) in the form of individualized protection elements, the size of the protection elements being greater than or equal to the thickness of the active layer of the separating layer.
